# FASCICULE DE BREVET EUROPEEN

(11) **EP 3 852 587 B1**
(45) Date de publication et mention de la délivrance du brevet: **09.11.2022**
(21) Numéro de dépôt: 19774049.1
(22) Date de dépôt: 12.08.2019
(51) Int. Cl.: A47J 37/07

(54) **DISPOSITIF DE CUISSON À CHALEUR SOUFFLÉE ET BRASSÉE**
KOCHGERÄT MIT GEBLASENER UND GERÜHRTER WÄRME
COOKING DEVICE WITH BLOWN AND STIRRED HEAT

(30) Priorité: 10.08.2018 FR 1800860; 10.08.2018 FR 1800861
(43) Date de publication de la demande: 28.07.2021
(73) Titulaire: Ledermann, Marc, 74290 Talloires (FR)
(72) Inventeur: Ledermann, Marc, 74290 Talloires (FR)
(74) Mandataire: Nicolle, Olivier
(86) Numéro de dépôt international: PCT/EP2019/071607
(87) Numéro de publication internationale: WO 2020/030824

(56) Documents cités:
- EP-A1- 2 445 381
- EP-B1- 2 445 381
- KR-U- 20120 003 315
- US-A1- 2007 277 807
- US-A1- 2008 141 997

## Description

La présente invention concerne un dispositif de cuisson à chaleur soufflée et brassée.

Elle trouve une application générale dans le domaine des dispositifs de cuisson et plus particulièrement ceux qui sont prévus pour être utilisés en extérieur, tels que par exemple des barbecues.

Dans le document EP2445381B1, on a décrit un dispositif de cuisson comprenant un support de nourriture, un bâti, un moyen de fixation pour positionner un support de nourriture, ainsi qu'un système permettant d'alimenter le foyer pour une meilleure combustion.

Dans les dispositifs de cuisson connus, rien n'est prévu spécifiquement pour le brassage et la répartition de la chaleur afin d'obtenir une cuisson homogène et optimale de la nourriture.

Le problème posé par le Demandeur est justement de prévoir un dispositif de cuisson qui permette un brassage et une répartition satisfaisante de la chaleur pour une cuisson homogène et optimale de la nourriture.

La présente invention apporte une solution à ce problème ainsi que d'autres.

Elle porte sur un dispositif de cuisson selon la revendication 1.

Selon l'invention, le dispositif de cuisson comprend en outre un moyen de circulation d'air chaud disposé dans l'espace intermédiaire et propre à brasser l'air situé dans l'espace intermédiaire afin d'obtenir une chaleur soufflée brassée pour une cuisson homogène et optimale.

Selon l'invention, le moyen de circulation d'air est une hélice formée d'au moins une pale radiale disposée selon un axe de rotation parallèle à l'axe longitudinal du dispositif.

De façon surprenante, le Demandeur a observé que le mouvement en rotation des pales de l'hélice engendre non seulement une chaleur soufflée et brassée à l'intérieur de l'espace intermédiaire ainsi défini entre le support de cuisson et la source de chaleur mais aussi forme un écran au moins partiel à la flamme de la source de chaleur, ce qui permet de protéger la nourriture des flammes de la source de chaleur sans nuire à la transmission de la chaleur.

Selon des modes particuliers de réalisation, le dispositif comporte une ou plusieurs caractéristiques suivantes, prise(s) isolément ou suivant toutes les combinaisons techniquement possibles :
- l'hélice est autonome et le mouvement des pales de l'hélice est engendré par les flux ascendants d'air chaud ainsi créé par la source de chaleur;
- l'hélice est associé à un moyen d'entrainement appartenant au groupe formé par un entrainement mécanique, un entrainement par flux d'air, un entrainement par flux de fluide; un entrainement par flux de fluide aromatisé ;
- Le dispositif de cuisson comprend en outre un réservoir à double coque formant bouilloire disposé à proximité de la source de chaleur pour produire de la vapeur ;
- le matériau des pales de l'hélice appartient au groupe formé par céramique, tôle en acier inox alimentaire, fonte, pierre ou matériau équivalent ;
- le support de cuisson appartient au groupe formé par grille, plancha, wok ; broche ;
- le dispositif comprend en outre un montage de fixation de l'hélice dans l'espace intermédiaire, ledit montage comprenant au moins deux tubes creux disposés en croix et s'étendant chacun de part et d'autre du foyer de cuisson, le moyeu de l'hélice étant placé au centre de la croix ;
- un pommeau est fixé à la base inférieure du moyeu sous les pales de l'hélice, le pommeau étant équipé d'une pluralité de buses propres à projeter un flux d'air, un flux de fluide, un flux de vapeur, un flux de gaz, un flux de fluide aromatisé, ledit flux étant acheminé depuis une source jusqu'aux buses via les tubes creux ; un tel fluide notamment le fluide aromatisé offre ainsi plusieurs possibilités de cuisson différentes selon l'arôme choisi et incorporé dans le fluide ainsi projeté;
- le pommeau comprend trois couronnes de buses, les buses de la première couronne étant orientées horizontalement pour une projection de flux à l'horizontale, les buses de la seconde couronne étant orientées selon un angle positif par rapport à l'horizontale pour une projection de flux vers le haut, et les buses de la troisième couronne étant orientées selon un angle négatif par rapport à l'horizontale pour une projection de flux vers le bas ;
- le dispositif comprend en outre une couronne de buses disposées autour du foyer ouvert au niveau de l'espace intermédiaire délimité par la grille de cuisson et la source de chaleur ;
- le dispositif de cuisson est équipé d'un dispositif de soufflerie/ventilation disposé en couronne tout autour du foyer de cuisson avec des buses orientées horizontalement à 360° pour projeter/pulvériser/pulser un flux d'air, un flux de gaz, et/ou un flux de fluide sur les pâles de l'hélice ; ou bien directement vers le foyer de cuisson dépourvu alors d'hélice.

D'autres avantages et caractéristiques de l'invention apparaîtront à l'examen de la description et des dessins dans lesquels :
- la **figure 1** est une vue en perspective d'un dispositif de cuisson, à l'état fermé, avec un sous ensemble de cuisson interchangeable en position rentrée dans laquelle elle se trouve en alignement longitudinal avec le support de cuisson ; le dispositif de cuisson étant équipé d'un ensemble de mâts de fixation emboîtés les uns dans les autres et supportant des accessoires et ustensiles de cuisson ;
- la **figure 2** est une vue en perspective d'un mât de fixation ;
- les **figures 3** et **4** représentent schématiquement différents exemples de fixation d'accessoires de cuisson et/ou d'ustensiles ;

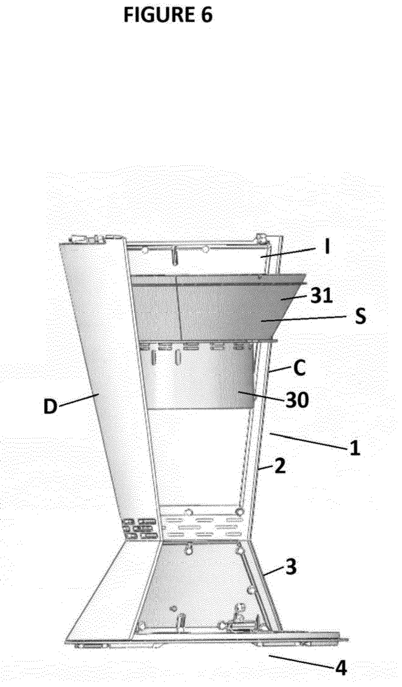

- les **figures 5** et **6** sont des vues en perspective d'un dispositif de cuisson à l'état ouvert et avec un sous ensemble de cuisson interchangeable en position rentrée dans laquelle elle se trouve en alignement longitudinal avec le support de cuisson ;

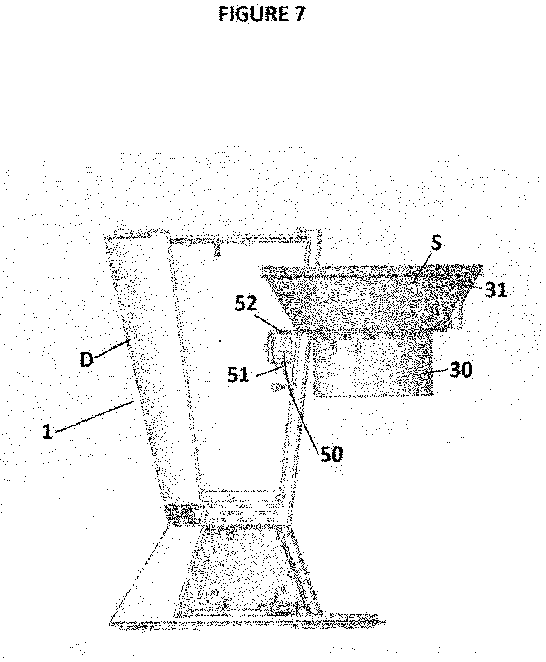

- la **figure 7** est une vue en perspective du dispositif de cuisson à l'état ouvert avec le sous ensemble de cuisson interchangeable en position déportée par rapport à l'axe longitudinal du dispositif de cuisson ;
- les **figures 8** à **10** sont des vues de dessus du dispositif de cuisson illustrant la cinématique de l'ouverture du dispositif et le déport latéral du sous ensemble de cuisson interchangeable ;
- la **figure 11** est une vue du dispositif de cuisson de la **figure 1** équipé d'une hélice ;
- la **figure 12** représente schématiquement un dispositif de cuisson équipé d'une hélice avec le support de cuisson et un coupe-feu-;
- la **figure 13** représente schématiquement l'hélice placée dans l'espace intermédiaire de cuisson en vue de dessous sans le support de cuisson ;
- la **figure 14** représente schématiquement l'hélice de la **figure 13** selon une vue de dessus ;
- la **figure 15** représente très schématiquement un montage de l'hélice ;
- les **figures 16** à **25** représentent différents mode de réalisation et agencement des ailettes de l'hélice.

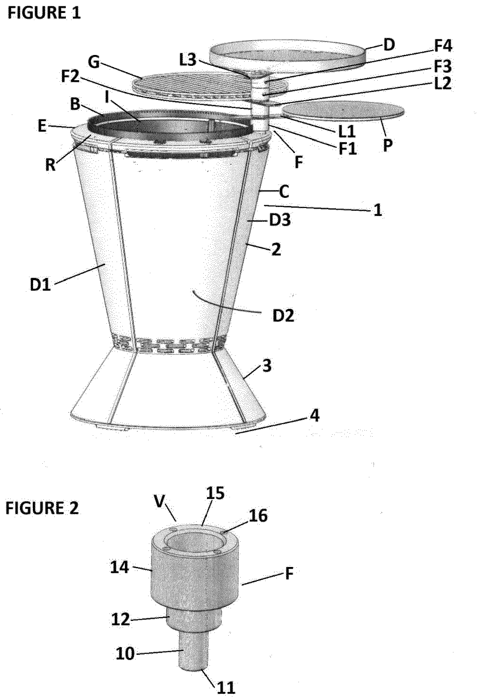

En référence à la **figure 1****,** on a représenté un dispositif de cuisson 1 qui comprend un bâti en corps creux C de forme sensiblement tubulaire en diabolo asymétrique à cônes inversés 2 et 3, orienté verticalement. Le dispositif de cuisson 1 est prévu pour reposer sur sa base sur une surface telle que le sol 4. Le dispositif 1 est à l'état ouvert (portes non représentées ouverte).

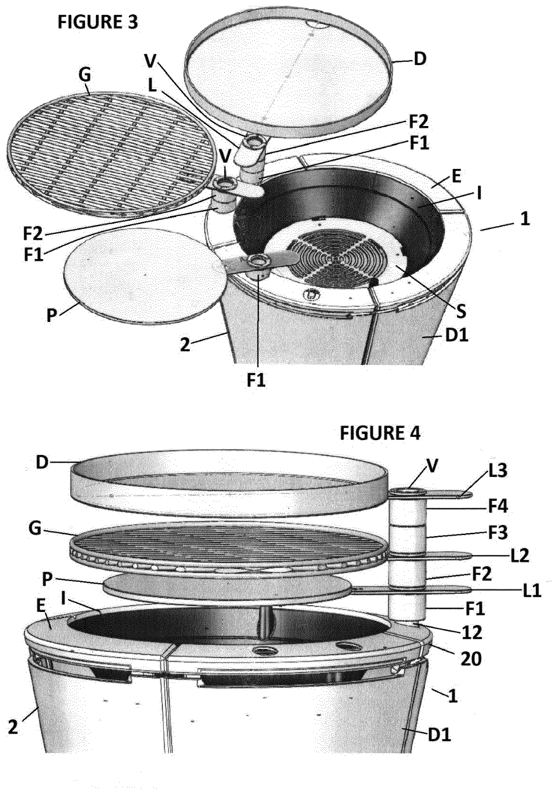

Un support de nourriture G (**figures 3** et **4**) est prévu pour recevoir et supporter de la nourriture à cuire. Le support de nourriture G est conçu pour être positionné dans une position de cuisson par un moyen de fixation F (décrit en détail en référence à la **figure 2**) dans un espace de cuisson délimité par le corps creux C du dispositif de cuisson 1.

La nourriture positionnée sur le support de nourriture G est cuisinée grâce à la chaleur émise par une source chaleur S prévue au-dessous du support de nourriture G et à distance de celui-ci en définissant un espace intermédiaire I.

Le support de nourriture G est une grille sensiblement circulaire. Dans d'autres modes de réalisation non représentés, le support de nourriture G peut être une grille de forme carrée, rectangulaire ou encore de toute autre forme. En variante, le support de nourriture G est une plancha, un support de broche, ou un wok.

La source de chaleur S appartient au groupe formé par foyer à charbon ou autres combustibles solides; brûleur à gaz ; résistance électrique.

Le moyen de fixation F peut être constitué de protubérances (non représentées) prévues sur l'intérieur de l'enveloppe latérale rigide E du corps creux C du dispositif de cuisson 1 et sur lesquelles repose le support de nourriture G.

En variante très avantageuse (**figures 3 et 4**)**,** le moyen de fixation F comprend au moins un mât de fixation à un ou plusieurs étages. Chaque étage comprend un corps 12, un embout femelle creux 14 ménagé dans le corps 12 et un embout mâle 10 en forme de tige faisant saillie. L'embout mâle 10 est adapté pour entrer en prise dans une fenêtre O ménagée dans la paroi latérale périphérique 20 du corps creux C du dispositif de cuisson 1. En référence à la **figure 1** on a représenté 4 fenêtres O individualisées en 01 à 04.

Avantageusement, l'embout mâle 10 est aussi adapté pour entrer en prise dans l'embout femelle d'un étage inférieur en cas d'emboîtement de deux étages l'un dans l'autre.

En pratique, l'embout mâle 10 a un petit diamètre. La partie 10 est pleine et forme une tige 11 destinée à traverser de part en part le bord 20 de l'enveloppe latérale rigide E du corps creux C du dispositif 1.

Le corps 12, appelée encore partie intermédiaire, est de diamètre supérieur à celui de la partie inférieure 10. La partie intermédiaire 12 est creuse et destinée à recevoir la tige 11 d'un autre mât en cas d'empilement/emboîtement de mats les uns dans les autres (**figure 4**)**.**

L'embout femelle 14, appelée encore partie supérieure 14, est de diamètre supérieur à celui de la partie intermédiaire 12. La partie 14 est creuse. Elle est destinée à recevoir la partie intermédiaire 12 en cas d'empilement (emboîtement) de plusieurs mâts F1, F2, F3 et F4 tels qu'illustrés en **figure 4****.** L'extrémité libre 15 de la partie supérieure 14 comprend des évidements 16 pour la fixation par vis V d'une languette L. La languette L forme un manche pour supporter des accessoires de cuisson, notamment le support de nourriture G que l'on décrira plus en détail ci-après.

Le moyen de fixation F peut être utilisé pour supporter un ou plusieurs accessoires ou ustensiles de cuisson appartenant au groupe formé par pare feu P, plateau formant desserte D, support de cuisson G et autres ustensiles/accessoires de cuisson.

Le mât F peut être utilisé avec une seule languette L de manière à supporter un seul accessoire. Par exemple, en référence à la **figure 3****,** le pare feu (coupe-feu) P est supporté par un seul mât F au moyen d'une languette L. De son côté, la grille de cuisson G est supportée par un agencement à deux mâts F1 et F2 empilés l'un dans l'autre afin de permettre de supporter la grille de cuisson G à une hauteur supérieure à celle du pare feu (**figure 3**)**.** De même, la desserte D est supportée par un agencement à deux mats F1 et F2 empilés l'un dans l'autre et placé à proximité de la fixation de la grille de cuisson G sur le bord rigide 20 de l'enveloppe latérale E du corps creux du dispositif de cuisson 1.

En variante (**figure 4**), les accessoires de cuisson P, G et D sont supportés par un agencement à quatre mats F1 à F4, empilés les uns dans les autres avec le mât F1 associé au pare feu P via la languette L1, avec le mât F2 associé à la grille de cuisson G via la languette L2 et les mâts F3 et F4 associé à la desserte D via la languette L3. Ici, la tige 11 du mât F1 traverse le bord 20 de l'enveloppe latérale E du corps creux C du dispositif de cuisson. D'autres configurations et dispositions sont bien évidemment possible avec des empilements d'un ou plusieurs mats F.

De préférence non limitative, le dispositif de cuisson 1 comprend plusieurs mâts F dont certains peuvent assurer la fonction de supporter des ustensiles ou accessoires hors de l'espace de cuisson et d'autres peuvent assurer la fonction de supporter d'autres accessoires et des supports de cuisson dans l'espace de cuisson selon les options, ustensiles et accessoires disponibles pour l'utilisateur.

Avantageusement, le mât F peut être monté tournant, ce qui permet de déplacer les accessoires de cuisson, notamment le support de cuisson G d'une position de cuisson à une position hors cuisson et vice versa.

Le mât F peut être également sujet à une translation verticale. Le réglage en hauteur des mâts peut être réalisé par un mécanisme manuel ou motorisé (non représenté).

Le matériau des mats F appartient au groupe formé par céramique, tôle en acier inox alimentaire, fonte, pierre, ou matière équivalente répondant à des caractéristiques similaires ou supérieures.

Grâce au mécanisme de fixation F ainsi décrit, l'appareil de cuisson 1 est adaptable à tout type de source de chaleur. Il utilise un minimum d'espace pour une capacité de cuisson maximum. Il offre une utilisation ponctuelle, séquentielle et/ou en simultanée de un ou plusieurs accessoires de cuisson (grille, plancha, wok, broche et/ou de fonctions (coupe- feu, desserte)). Il en résulte une optimisation de la capacité de production par foyer et garantit de fait la parfaite maîtrise des différents types de cuisson en toute simplicité.

Le mât de fixation ainsi décrit permet de concevoir un système de cuisson transposable à d'autres dispositifs de cuisson, adaptable à un seul dispositif de cuisson ou encore commun à plusieurs dispositifs de cuisson. Il peut être utilisé avec tout type de source de chaleur (gaz, électrique, combustibles). Il permet de mixer les fonctions (coupe-feu, broche, cuisson, grille, desserte, plancha, wok, pierre à pizza, cloche de cuisson,...).

Le mât de fixation peut être placé dans le foyer et/ou en dehors du foyer, ou bien encore en dehors du système de cuisson.

Le mât de fixation offre des multi-positions pour les supports de cuisson, accessoires et/ou ustensiles selon des mouvements de rotation et/ou d'élévation, ce qui permet d'optimiser la capacité de production par foyer, garantissant ainsi une parfaite maîtrise des différents types de cuisson en toute simplicité.

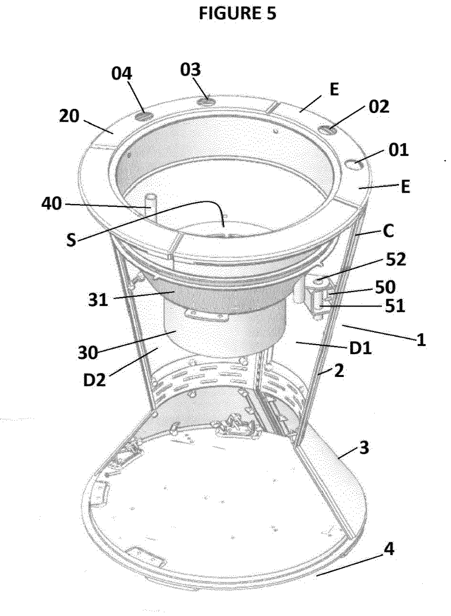

On fait maintenant référence à la **figure 5****.** La structure tubulaire du corps du dispositif de cuisson est formée de l'assemblage de quatre éléments D, appelés encore secteurs et individualisés en D1 à D4 qui présentent un profil en arc et qui sont identiques. Chaque élément D comprend selon un premier bord une feuillure de recouvrement et selon un second bord opposé une feuillure complémentaire. En variante, les éléments D peuvent avoir un profil différent par exemple en ligne brisées pour constituer un contour polygonal.

La paroi périphérique tubulaire C comporte une partie fixe formant un moyen de liaison rigide qui relie la base ou bâti 2 et 3 à la partie supérieure. du dispositif de cuisson 1. La partie formant le moyen de liaison rigide est formée de deux secteurs fixes D de paroi, ici D1 et D2.

Sur chacun des secteurs fixes s'articule un secteur mobile. Les secteurs mobiles sont déplaçables par pivotement entre une position de fermeture et une position d'ouverture. En position d'ouverture on libère l'accès à l'espace intérieur.

L'articulation des secteurs mobiles D3 et D4 s'effectue au moyen de charnières 50 selon un axe de pivotement parallèle à l'axe longitudinal.

La source de chaleur S et son moyen de fixation forment un sous-ensemble de cuisson interchangeable rapporté sur le moyen de liaison rigide.

Le sous-ensemble de cuisson interchangeable comprend une partie supérieure fixe et une partie inférieure mobile 30 et 31, ladite partie inférieure mobile 30 et 31 pouvant prendre une position rentrée dans laquelle elle se trouve en alignement longitudinal avec le support de nourriture et une position de sortie dans laquelle après ouverture de la paroi périphérique elle se trouve déportée latéralement

Le sous ensemble de cuisson interchangeable comprend une couronne périphérique constituant le moyen de fixation destinée à être fixée au moyen de liaison rigide formé par les secteurs fixes de la paroi périphérique et qui peut supporter un support de nourriture tel.

Le sous ensemble de cuisson interchangeable comprend une source sous forme d'un bruleur à gaz, une résistance électrique ou bien un foyer à charbon ou autres combustibles solides.

Dans le cas d'une source de chaleur de type foyer à charbon, le foyer a une forme tronconique évasée vers le support de nourriture dont le fond est occulté par une grille laissant passer les cendres qui sont récupérées avec les résidus de cuisson dans un réceptacle inférieur en forme conique qui se déverse dans un réservoir amovible.

Le réservoir amovible 30 comporte en outre des volets réglables d'entrée d'air pour le réglage de la combustion dans le foyer.

La source de chaleur S est montée mobile par rotation d'axe latéral longitudinal vis-à-vis du dispositif de fixation.

L'axe de rotation de la source de chaleur S est placé au voisinage de la périphérie du moyen de fixation orienté selon une direction longitudinale parallèle à l'axe longitudinal et agencé de façon que le déport latéral possible de la source de chaleur se fasse dans l'ouverture réalisée par les secteurs mobiles de la paroi périphérique.

Le dispositif de cuisson 1 comprend des charnières 50 de type à double débattement.

Le premier débattement correspond à l'articulation de la partie mobile de la paroi périphérique selon un axe de pivotement parallèle à l'axe longitudinal et solidaire de la partie fixe de la paroi rigide.

Le second débattement fait suite au premier débattement. Il correspond en position d'ouverture de la partie mobile de la paroi périphérique à l'articulation latérale de la partie inférieure mobile du sous-ensemble interchangeable selon un axe de pivotement parallèle à l'axe longitudinal et solidaire de la partie mobile de la paroi rigide.

Une telle charnière à double débattement 50 non seulement facilite l'accès à l'espace intérieur mais en outre rend aisé le pivotement en position déportée de la partie mobile du sous ensemble de cuisson. Il en résulte une amélioration de la sécurité d'utilisation des opérations de nettoyage ou de rechargement de combustible.

Une telle charnière 50 à double débattement selon des premier et second axes de pivotement parallèles à l'axe longitudinal du dispositif de cuisson mais distincts l'un de l'autre, le premier étant solidaire de la partie fixe tandis que le second est solidaire de la partie mobile de la paroi rigide offrent de nombreux avantages. Ainsi, l'accès à l'espace intérieur est facilité aussi bien en partie haute qu'en partie basse et en outre le pivotement en position déportée de la partie mobile du sous ensemble de cuisson rend particulièrement aisé l'accès aussi bien en partie haute qu'en partie basse au sous ensemble de cuisson interchangeable. Il en résulte une amélioration de la sécurité d'utilisation des opérations de nettoyage ou de rechargement de combustible.

De plus, en retirant le gond 51 de la charnière, il est possible d'extraire totalement le sous ensemble de cuisson interchangeable et de le placer à un endroit choisi, par exemple à une hauteur plus proche de la grille de cuisson ou en dehors du foyer. Une telle réalisation offre encore davantage de possibilité d'utilisation du sous ensemble de cuisson.

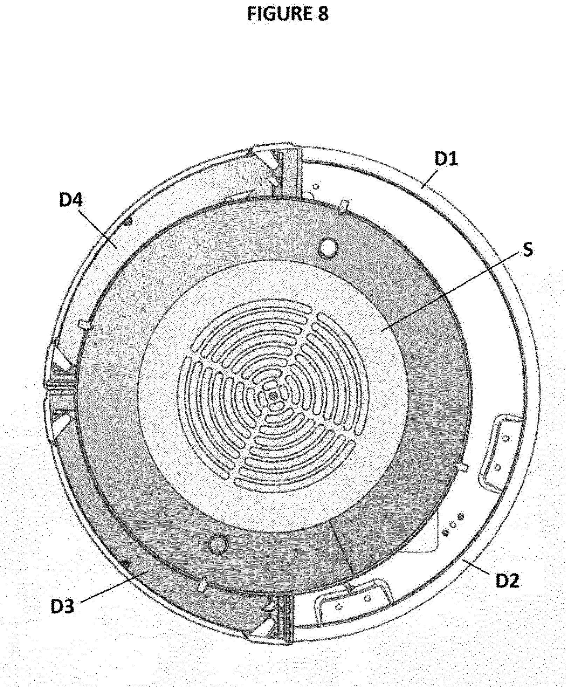

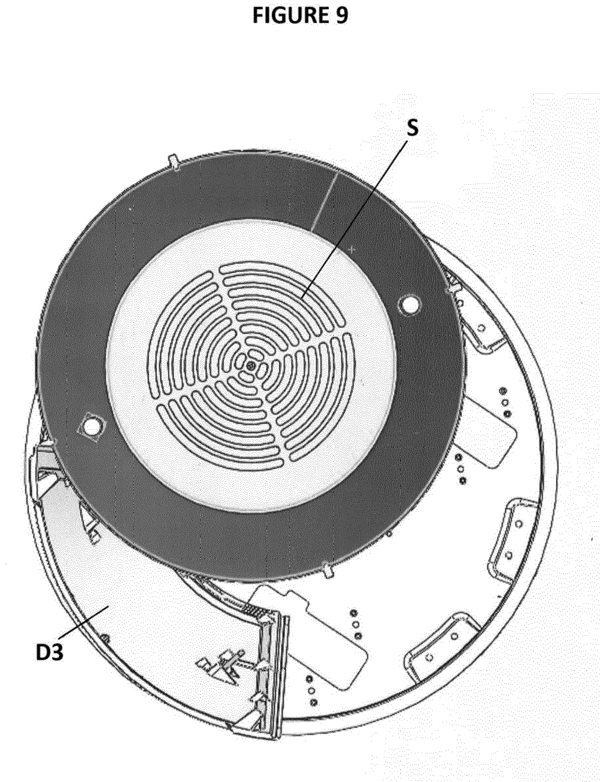

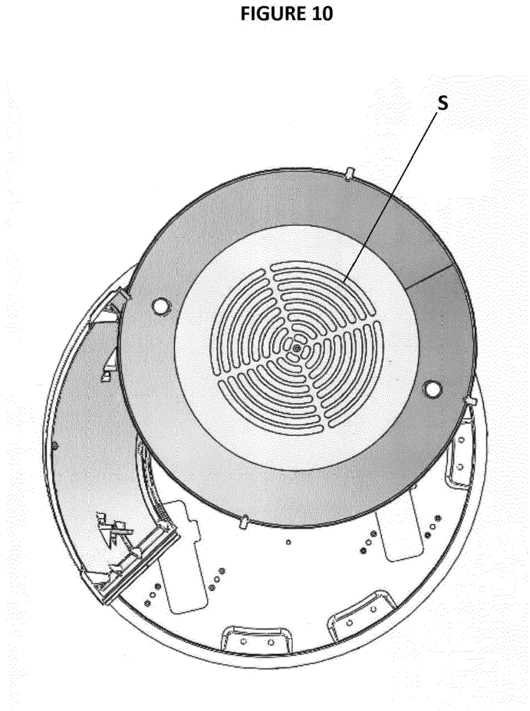

En référence aux **figures 8** à **10****,** on observe la cinématique de la structure ouvrante entre la position totale rentrée (**figure 8**) et la position totalement déployée (**figure 10**) via la position intermédiaire (**figure 9**)**.**

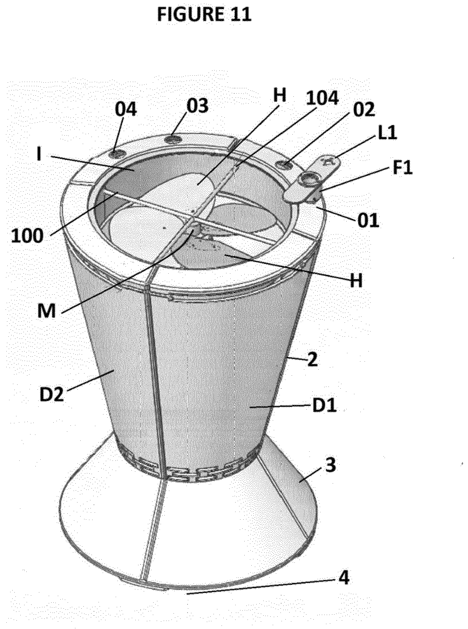

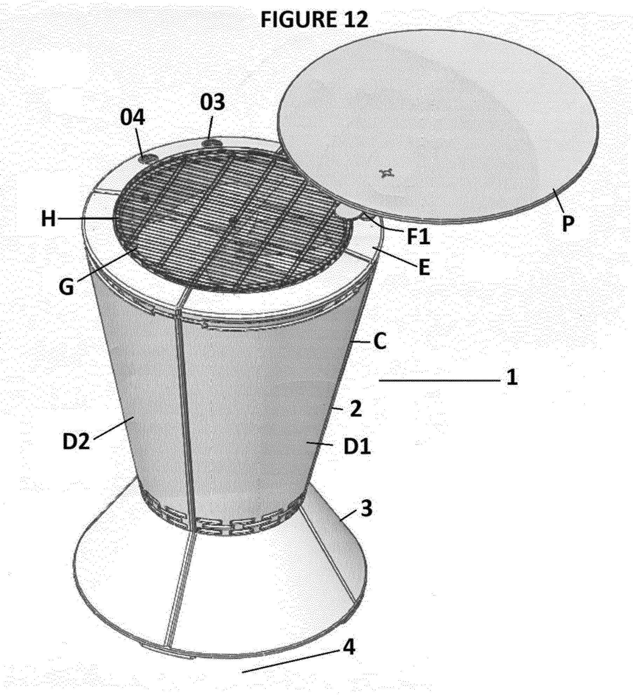

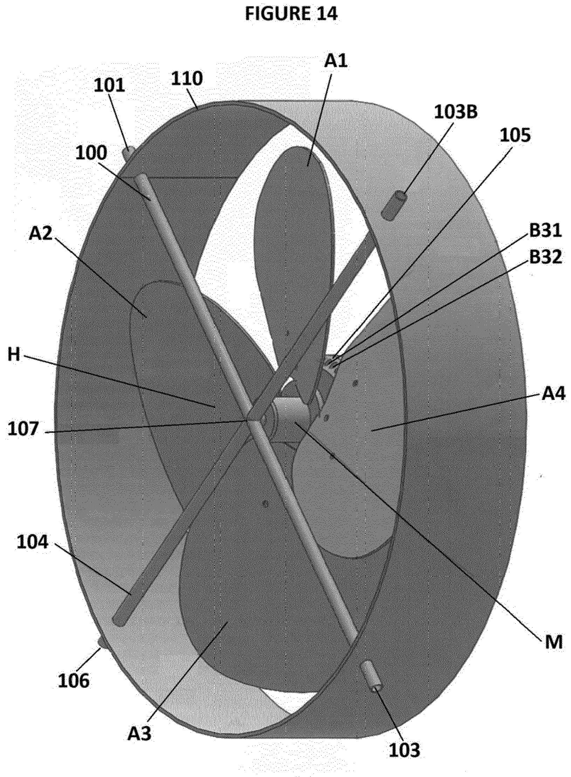

En référence aux **figures 11** à **14****,** le dispositif de cuisson 1 est équipé d'une hélice H disposée dans l'espace intermédiaire I délimité par le support de cuisson G et la source de chaleur S. L'hélice H constitue ici un moyen de circulation d'air propre à brasser l'air situé dans l'espace intermédiaire I afin d'obtenir une chaleur soufflée et brassée pour une cuisson homogène et optimale

Selon l'invention, l'hélice H est formée d'au moins une pale ou ailette A, radiales, et disposées en étoile selon un axe de rotation parallèle à l'axe longitudinal du dispositif de cuisson 1.

Le matériau des pales A de l'hélice H appartient au groupe formé par céramique, tôle en acier inox alimentaire, fonte, matière équivalente répondant à des caractéristiques similaires ou supérieures.

La forme des pales A est avantageusement choisie pour brasser l'air efficacement, par exemple en forme de cuillère.

De plus, le mouvement des pales de l'hélice créé un flux ascendant d'air chaud, permettant la circulation d'air chaud vers le support de cuisson.

De façon surprenante, le Demandeur a observé que le mouvement en rotation des pales de l'hélice engendre non seulement une chaleur soufflée et brassée à l'intérieur de l'espace intermédiaire I ainsi défini entre le support de cuisson G et la source de chaleur S mais aussi forme un écran au moins partiel à la flamme de la source de chaleur S. Il en résulte que les pâles protègent la nourriture des flammes de la source de chaleur S sans nuire à la transmission de la chaleur. Avantageusement, l'agencement des pales est choisi pour récupérer les résidus de cuisson qui tombent du support de cuisson G. L'hélice H joue alors le rôle de filtre et d'écran anti flamme et anti graisse brulée. En variante, un tamis en fibre de verre (non représenté) peut être placé entre la grille G et l'hélice H afin d'arrêter les résidus de cuisson avant de tomber sur l'hélice.

Selon un mode de réalisation, l'hélice H est autonome. Le mouvement des pales A de l'hélice H est alors engendré par les flux ascendants d'air chaud ainsi créé par la source de chaleur S.

Selon l'invention, l'hélice H est montée solidaire du support de cuisson G, par exemple en reliant un moyeu M de hélice H à la grille de cuisson. Un roulement à billes (non représenté) peut être incorporé pour faciliter le mouvement de rotation des pales de l'hélice.

En alternative, l'hélice H peut être non solidaire de la grille de cuisson et fixée par un moyen de fixation de type mât F dédié à l'hélice.

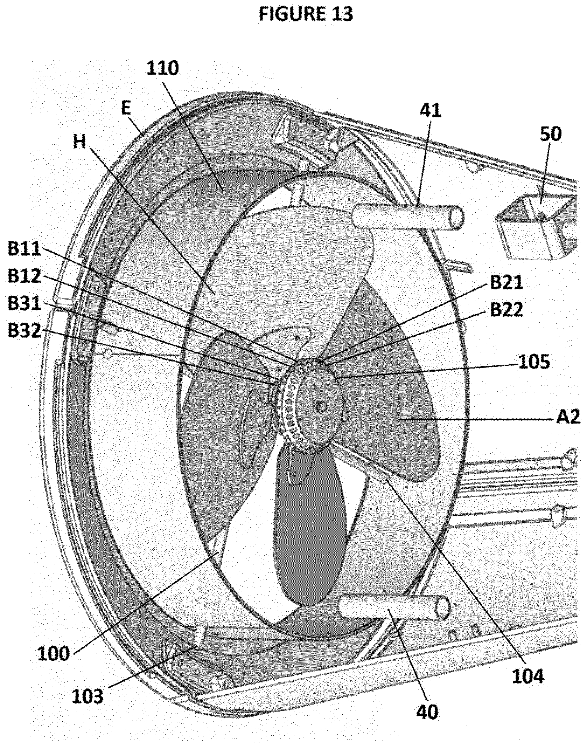

Selon une autre alternative (**figures 13** à **14**)**,** l'hélice H est suspendue à l'aide d'un montage de fixation de l'hélice dans l'espace intermédiaire I, ledit montage comprenant au moins deux tubes creux 100 et 104 disposés en croix et s'étendant chacun de part et d'autre du foyer de cuisson, le moyeu M de l'hélice H étant placé au centre de la croix 107.

Le tube creux 100 comprend un embout 101 qui traverse le rebord 110 tandis que diamétralement opposé l'embout 103 traverse le rebord 110 du bâti.

De même, Le tube creux 104 comprend un embout 103B qui traverse le rebord 110 tandis que diamétralement opposé l'embout 106 traverse le rebord 110 du bâti.

Très avantageusement, un pommeau 105 est fixé à la base inférieure du moyeu M sous les pales A de l'hélice H. Le pommeau est équipé d'une pluralité de buses B propres à projeter un flux d'air, un flux de fluide, un flux de vapeur, un flux de gaz, un flux de fluide aromatisé, ledit flux étant acheminé depuis une source jusqu'aux buses via les tubes creux 100 et 104.

En pratique, le pommeau 105 comprend trois couronnes de buses B, les buses de la première couronne sont individualisées en B11 à B12. Elles sont orientées horizontalement pour une projection de flux à l'horizontale.

Les buses de la seconde couronne sont individualisées en B21 à B22. Elles sont orientées selon un angle positif par rapport à l'horizontale (par exemple +45°) pour une projection de flux vers le haut.

Les buses de la troisième couronne sont individualisées en B31 à B32. Elles sont orientées selon un angle négatif par rapport à l'horizontale (par exemple -45°) pour une projection de flux vers le bas.

En complément du flux d'air chaud engendré par la source de chaleur, l'hélice H peut être associée en outre à un moyen d'entrainement mécanique de type transmission par chaîne, crémaillère, courroie (non représenté).

En référence à la **figure 13****,** on a représenté un autre mode d'entrainement de l'hélice H dans lequel l'hélice H est animée par un système de flux air, fluide, ou gaz à l'aide de deux tubes creux 40 et 41 disposés verticalement.

Selon une autre alternative (non représentée), le dispositif de cuisson peut être équipé d'un dispositif de soufflerie/ventilation disposée en couronne R (**figure 1**) tout autour du foyer de cuisson avec des buses B orientées horizontalement à 360° pour projeter/pulvériser/pulser un flux d'air, un flux de gaz, et/ou un flux de fluide sur les pâles A de l'hélice.

On note que les buses B sont aptes à pulvériser un flux d'air, gaz, fluide aromatisé vers le foyer ouvert équipé d'une hélice (**figure 11**) ou dépourvu d'hélice (**figure 1**)**,** ce qui multiplie encore les possibilités de cuissons, avec en outre la possibilité de choisir l'arôme ainsi projeté dans le foyer ouvert.

Par exemple, les buses B sont ménagées dans une couronne disposée à 360° autour du foyer ouvert au niveau de l'espace intermédiaire I délimité par la grille de cuisson G et la source de chaleur S.

Les buses B peuvent être fixes ou orientables.

En variante, les buses peuvent être associées à un système de contrôle qui pilote l'ouverture/fermeture des buses B. Ainsi, le flux ainsi pulsé par les buses peut être contrôlé, orienté et variable en puissance et en direction.

Le Demandeur a observé de façon surprenante que les buses peuvent être orientées selon différentes orientations et qu'en contrôlant l'orientation des buses on peut obtenir différents effets surprenants et avantageux.

Par exemple, en orientant les buses à 90° par rapport à l'axe horizontal, on permet d'obtenir un rideau d'air vertical formant cheminée cylindrique virtuelle.

Selon un autre exemple, en orientant les buses à +45° par rapport à l'axe horizontal on obtient une cheminée conique.

Selon encore un autre exemple, en orientant les buses à - 45°, on génère un souffle d'air chaud sur la source de chaleur (braises).

Une turbine (non représentée) peut alimenter les buses B ainsi réparties autour de l'espace intermédiaire I via une canalisation d'entrée (non représentée). La turbine peut pousser un air chaud à travers les buses B.

En variante, le corps creux C est à double coque (non représentée) pour former un réservoir d'eau ou de fluide. La turbine projette alors une vapeur d'eau et/ou un fluide qui peut être aromatisé afin d'offrir différentes variantes de cuisson et fumets.

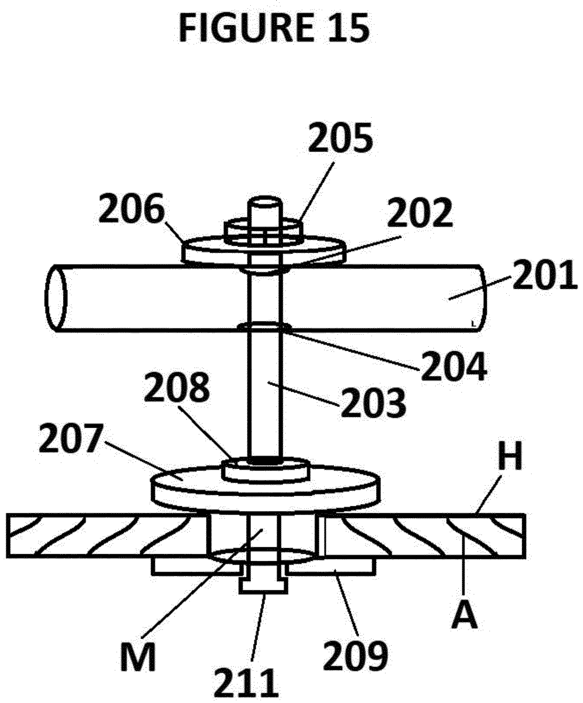

En référence à la **figure 15****,** l'hélice H est suspendue à un seul tube rond 201. Le montage de l'hélice H dans l'espace intermédiaire I comprend un système à vis 205, rondelles 206, 207, 209, tige 203 et écrou 211. Avantageusement, le montage entre le tube rond 201 et le montage de l'hélice font appel à un choix particulier du jeu des rondelles 206 et 207. Ainsi le diamètre du jeu 202 de la rondelle 206 est choisi avec un diamètre inférieur au diamètre du jeu 204 pour permettre à la tige 203 supportant l'hélice H d'osciller autour de son axe. De même, le diamètre du jeu 204 est choisi avec un diamètre inférieur au diamètre du jeu 208 de la rondelle 207 pour permettre à la tige 203 supportant l'hélice H d'osciller autour de son axe. Un tel montage permet en outre de s'affranchir de la mise à niveau horizontal de l'hélice.

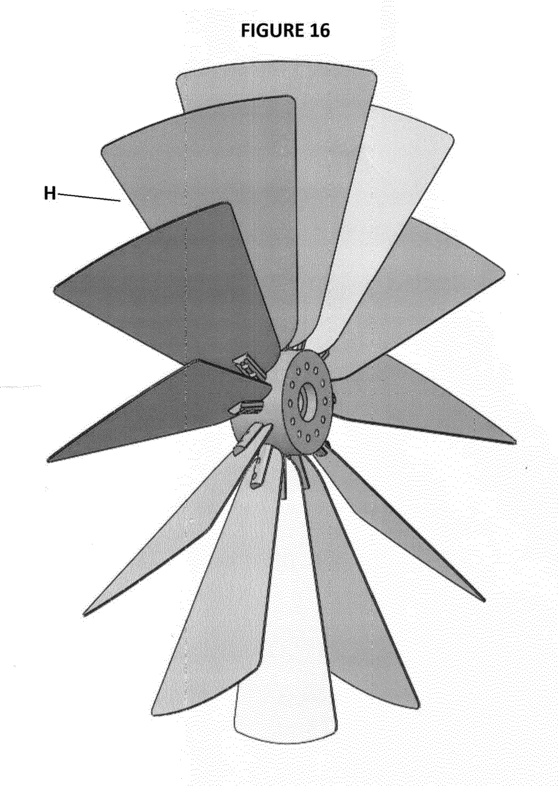

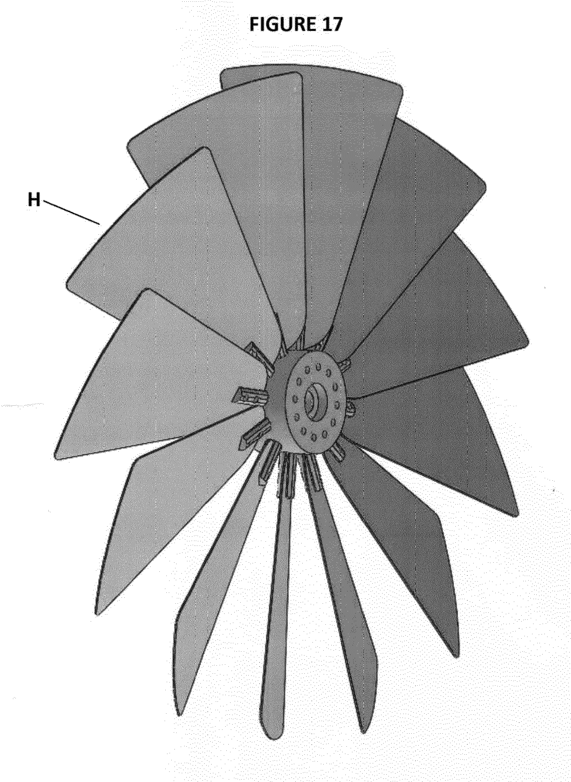

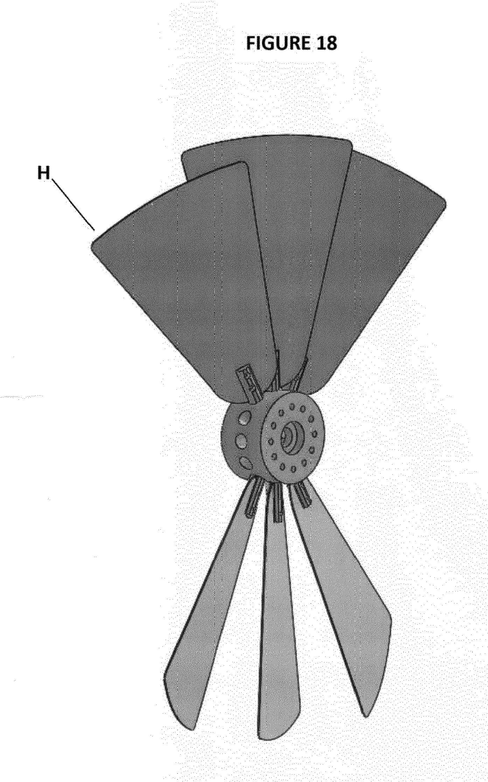

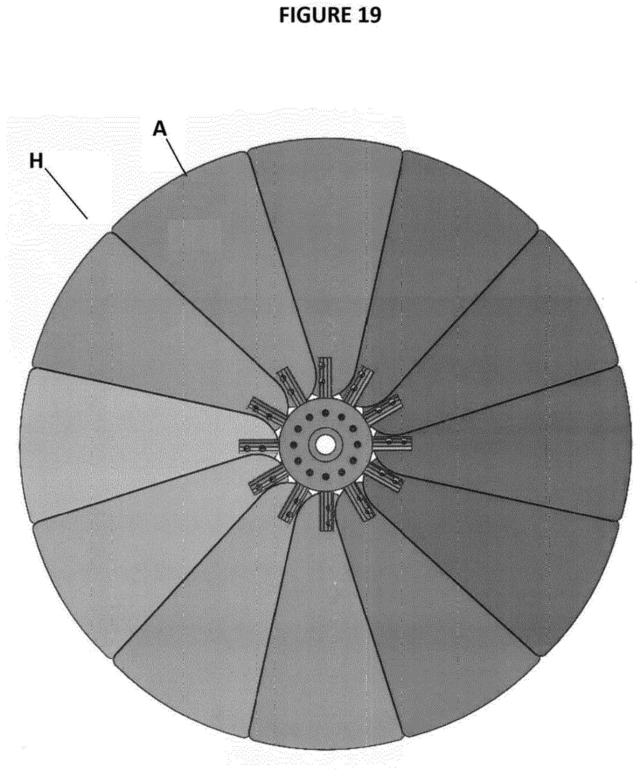

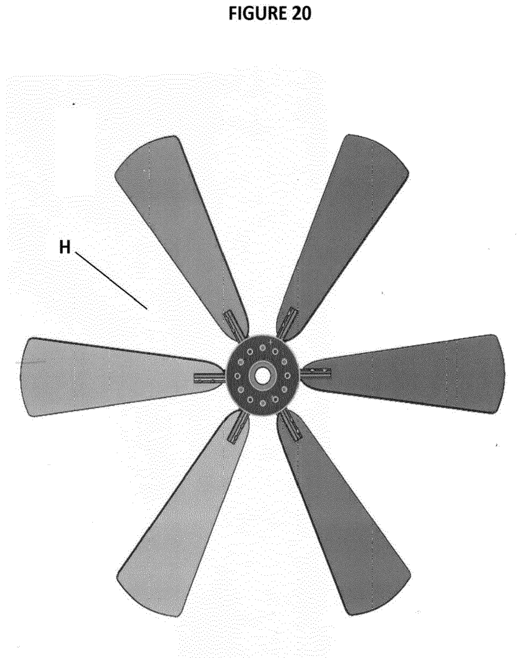

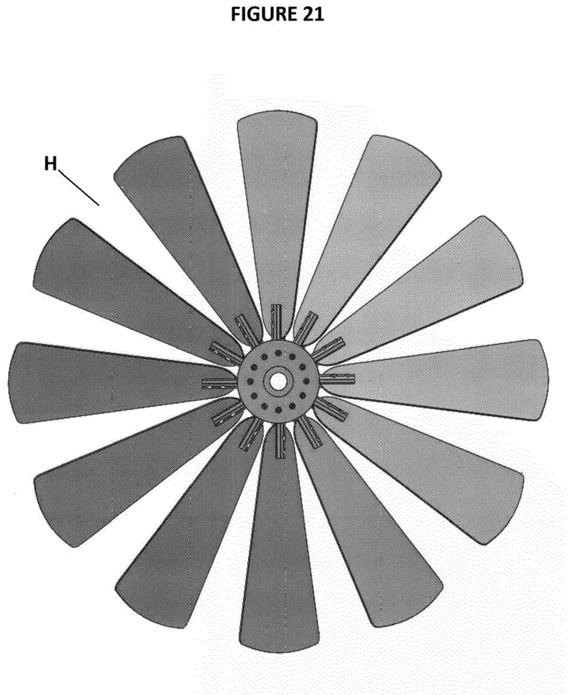

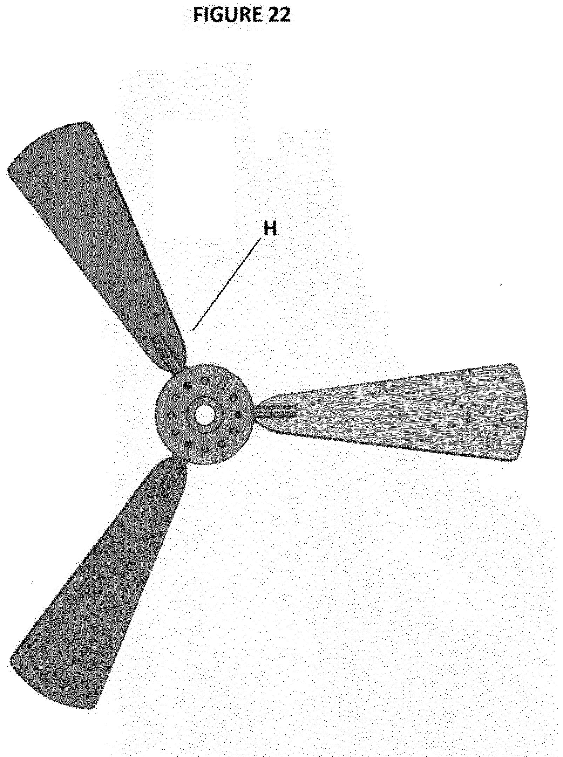

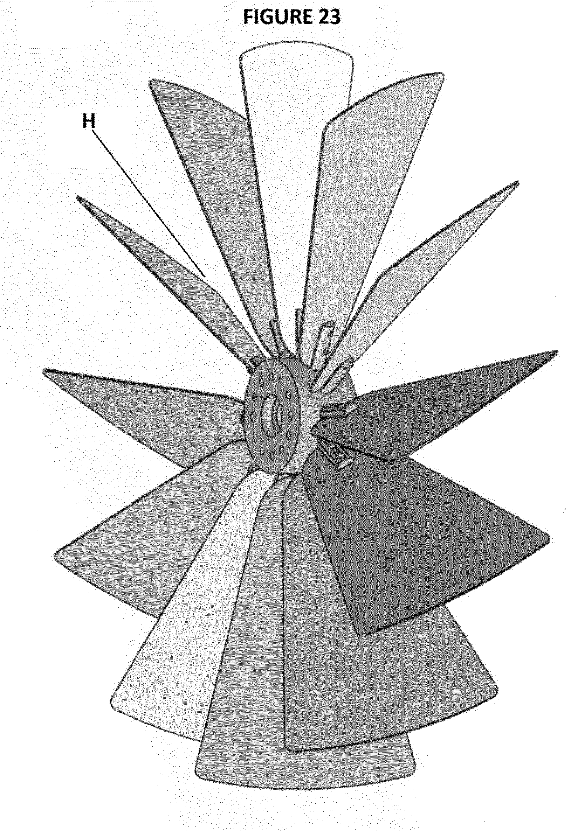

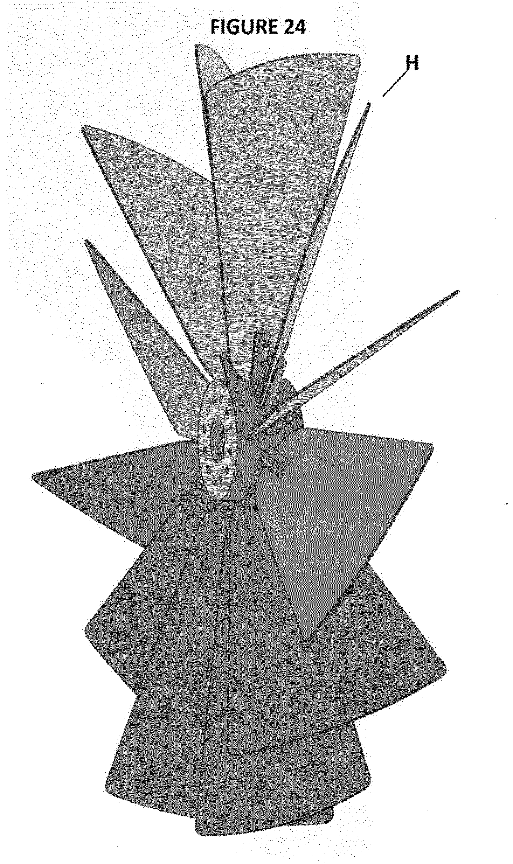

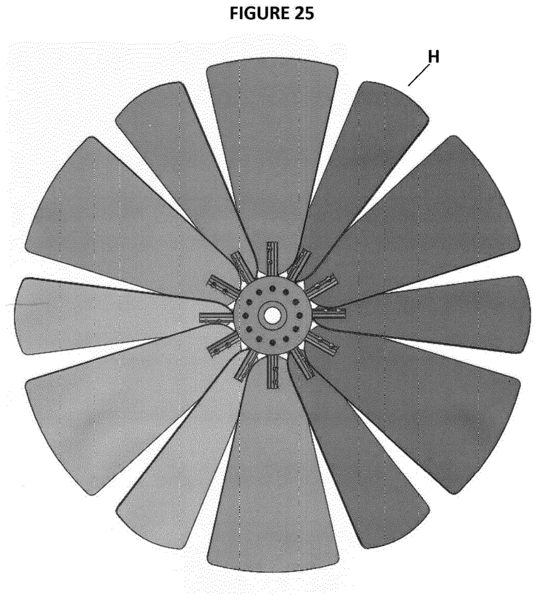

En référence aux **figures 16** à **25****,** on a représenté différents modes de réalisation des ailettes de l'hélice H dans lesquels par exemple l'hélice est à 12 ailettes A qui occultent totalement le foyer (**figure 19**)**,** ou occultent partiellement avec des ailettes de tailles différentes (**figure 25**)**.** Le nombre et l'orientation des ailettes peuvent être choisis selon l'effet attendu sur le brassage de l'air et l'occultation du foyer.

## Revendications

1. Dispositif de cuisson (1) comprenant :
- un support de nourriture (G) conformé pour recevoir et supporter de la nourriture en cours de cuisson ;
- un corps creux (C) ayant une partie inférieure (3) adaptée pour reposer sur une surface d'utilisation (4) ;
- un moyen de fixation (F) pour positionner le support de nourriture (G) sur le corps creux (C) dans au moins une position de cuisson ; et
- une source de chaleur (S) positionnée entre le support de cuisson (G) et le corps creux (C) en définissant avec le support de cuisson (G) un espace intermédiaire (I), le dispositif de cuisson comprenant en outre un moyen de circulation d'air chaud (H, B) disposé dans l'espace intermédiaire (I) et propre à souffler et brasser l'air situé dans l'espace intermédiaire (I) afin d'obtenir une chaleur soufflée et brassée pour une cuisson homogène et optimale, ledit dispositif de cuisson étant **caractérisé en ce que** le moyen de circulation d'air chaud est une hélice (H) formée d'au moins une pale (A) radiale montée tournante selon un axe de rotation parallèle à l'axe longitudinal du dispositif de cuisson (1) et **en ce que** l'hélice est montée solidaire du support de cuisson (G).

2. Dispositif selon la revendication 1, **caractérisé en ce que** l'hélice (H) est autonome et le mouvement de l'hélice (H) est engendré par les flux ascendants d'air chaud ainsi créé par la source de chaleur (S).

3. Dispositif selon la revendication 1 ou la revendication 2, **caractérisé en ce que** l'hélice (H) est mise en rotation par un moyen d'entrainement appartenant au groupe formé par entrainement mécanique, entrainement par flux d'air projeté, entrainement par flux de fluide projeté ; entrainement par flux de fluide aromatisé projeté.

4. Dispositif selon l'une quelconque des revendications 1 à 3, **caractérisé en ce qu'**il comprend un montage de fixation de l'hélice dans l'espace intermédiaire (I), ledit montage comprenant au moins deux tubes creux disposés en croix et s'étendant chacun de part et d'autre du foyer de cuisson, le moyeu de l'hélice étant placé au centre de la croix.

5. Dispositif selon la revendication 4, **caractérisé en ce qu'**il comprend en outre un pommeau fixé à la base inférieure du moyeu sous les pales de l'hélice, le pommeau étant équipé d'une pluralité de buses propres à projeter un flux d'air, un flux de fluide, un flux de vapeur, un flux de gaz, un flux de fluide aromatisé, ledit flux étant acheminé depuis une source jusqu'aux buses via les tubes creux.

6. Dispositif selon la revendication 5, **caractérisé en ce que** le pommeau comprend trois couronnes de buses, les buses de la première couronne étant orientées horizontalement pour une projection de flux à l'horizontale, les buses de la seconde couronne étant orientées selon un angle positif par rapport à l'horizontale pour une projection de flux vers le haut, et les buses de la troisième couronne étant orientées selon un angle négatif par rapport à l'horizontale pour une projection de flux vers le bas.

7. Dispositif selon l'une quelconque des revendications précédentes, **caractérisé en ce qu'**il comprend en outre une couronne de buses (R) disposée autour du foyer ouvert au niveau de l'espace intermédiaire (I) délimité par la grille de cuisson (G) et la source de chaleur (S).

8. Dispositif selon la revendication7, **caractérisé en ce qu'**il comprend en outre un système de contrôle de buses propre à piloter l'ouverture/fermeture des buses (B), leur orientation, ainsi que la puissance du flux ainsi pulsé par les buses.

## Patentansprüche

1. Kochvorrichtung (1), die folgendes umfasst:
- einen Nahrungsträger (G), der so ausgebildet ist, dass er die Nahrung während der Zubereitung aufnehmen und halten kann;
- einen Hohlkörper (C) mit einem unteren Teil (3), der so beschaffen ist, dass er auf einer Benutzungsfläche (4) aufliegt;
- ein Befestigungsmittel (F), um den Nahrungsträger (G) auf dem Hohlkörper (C) in mindestens einer Zubereitungsposition zu positionieren und
- eine Wärmequelle (S), die zwischen dem Nahrungsträger (G) und dem Hohlkörper (C) angeordnet ist, wobei sie mit dem Nahrungsträger (G) einen Zwischenraum (I) abgrenzt, wobei die Kochvorrichtung des Weiteren ein Mittel zur Zirkulation von Heißluft (H, B) umfasst, das in dem Zwischenraum (I) angeordnet ist und dazu geeignet ist, die im Zwischenraum (I) befindliche Luft zu blasen und umzuwälzen, um eine geblasene und umgewälzte Wärme für eine gleichmäßige und optimale Zubereitung zu erhalten, wobei die genannte Kochvorrichtung **dadurch gekennzeichnet ist, dass** das Mittel der Heißluftzirkulation eine Schraube (H) ist, die aus mindestens einem radialen Flügel (A) gebildet wird, der um eine zur Längsachse der Kochvorrichtung (1) parallele Drehachse drehbar montiert ist, und dass die Schraube fest an dem Nahrungsträger (G) montiert ist.

2. Vorrichtung nach Anspruch 1, **dadurch gekennzeichnet, dass** die Schraube (H) autonom ist und die Bewegung der Schraube (H) durch die auf diese Weise von der Wärmequelle (S) erzeugte aufwärtströmende Heißluft erzeugt wird.

3. Vorrichtung nach Anspruch 1 oder 2, **dadurch gekennzeichnet, dass** die Schraube (H) durch ein Antriebsmittel gedreht wird, das zu der Gruppe bestehend aus mechanischen Antrieben, Antrieben durch ausgestoßenen Luftstrom, Antrieben durch ausgestoßenen Fluidstrom und Antrieben durch ausgestoßenen aromatisierten Fluidstrom gehört.

4. Vorrichtung nach einem der Ansprüche 1 bis 3, **dadurch gekennzeichnet, dass** sie einen Aufbau zur Befestigung der Schraube im Zwischenraum (I) umfasst, wobei der Aufbau mindestens zwei Hohlrohre umfasst, die über Kreuz angeordnet sind und sich jeweils zu beiden Seiten der Kochstelle erstrecken, wobei die Nabe der Schraube in der Mitte des Kreuzes positioniert ist.

5. Vorrichtung nach Anspruch 4, **dadurch gekennzeichnet, dass** sie außerdem einen Knauf umfasst, der an der unteren Grundfläche der Nabe unter den Flügeln der Schraube befestigt ist, wobei der Knauf mit einer Vielzahl von Düsen ausgestattet ist, die geeignet sind, einen Luftstrom, einen Fluidstrom, einen Dampfstrom, einen Gasstrom oder einen aromatisierten Fluidstrom auszustoßen, wobei der Strom von einer Quelle über die Hohlrohre bis zu den Düsen geleitet wird.

6. Vorrichtung nach Anspruch 5, **dadurch gekennzeichnet, dass** der Knauf drei Düsenkränze umfasst, wobei die Düsen des ersten Kranzes horizontal ausgerichtet sind, um einen Strom in der Horizontalen auszustoßen, die Düsen des zweiten Kranzes in einem positiven Winkel zur Horizontalen ausgerichtet sind, um einen Strom nach oben auszustoßen, und die Düsen des dritten Kranzes in einem negativen Winkel zur Horizontalen ausgerichtet sind, um einen Strom nach unten auszustoßen.

7. Vorrichtung nach einem der vorhergehenden Ansprüche, **dadurch gekennzeichnet, dass** sie des Weiteren einen Düsenkranz (R) umfasst, der um die offene Kochstelle in Höhe des durch den Grillrost (G) und die Wärmequelle (S) abgegrenzten Zwischenraums (I) angeordnet ist.

8. Vorrichtung nach Anspruch 7, **dadurch gekennzeichnet, dass** sie des Weiteren ein Düsenkontrollsystem umfasst, das geeignet ist, das Öffnen/Schließen der Düsen (B), ihre Ausrichtung sowie die Leistung des auf diese Weise von den Düsen gepulsten Stroms zu steuern.

## Claims

1. A cooking device (1) comprising:
- a food rack (G) designed to receive and support food being cooked;
- a hollow body (C) having a bottom section (3) designed to rest on a work surface (4);
- a fixing means (F) for positioning the food rack (G) on the hollow body (C) in at least one cooking position and
- a heat source (S) positioned between the cooking rack (G) and the hollow body (C), defining with the cooking rack (G) an intermediate space (I), the cooking device furthermore comprising hot air circulation means (H, B) arranged in the intermediate space (I) and suitable for blowing and circulating the air located in the intermediate space (I) in order to obtain blown and circulated heat for uniform and optimal cooking, wherein said cooking device is **characterised in that** the hot air circulation means is an impeller (H) formed by at least one radial blade (A) mounted so as to rotate along an axis of rotation parallel to the longitudinal axis of the cooking device (1) and **in that** the impeller is mounted integrally with the cooking rack (G).

2. Device according to claim 1, **characterised in that** the impeller (H) is independent and that the movement of the impeller (H) is generated by the upward flows of hot air thus created by the heat source (S).

3. Device according to claim 1 or claim 2, **characterised in that** the impeller (H) is set in rotation by a drive means belonging to the group formed by a mechanical drive, projected air flow drive, projected fluid flow drive; projected flavoured fluid flow drive.

4. Device according to any one of claims 1 to 3, **characterised in that** it comprises an assembly for fixing the impeller in the intermediate space (I), wherein said assembly comprises at least two hollow tubes arranged in the form of a cross and each extending on either side of the cooking hob, wherein the hub of the impeller is placed in the centre of the cross.

5. Device according to claim 4, **characterised in that** it furthermore comprises a knob fixed to the lower base of the hub under the impeller blades, wherein the knob is equipped with a plurality of nozzles suitable for projecting a flow of air, a flow of fluid, a flow of steam, a flow of gas, or a flow of flavoured fluid, wherein said flow is conveyed from a source to the nozzles via the hollow tubes.

6. Device according to claim 5, **characterised in that** the knob comprises three rings of nozzles, wherein the nozzles of the first ring are oriented horizontally for horizontal flow projection, the nozzles of the second ring are oriented at a positive angle to the horizontal for upward flow projection, and the nozzles of the third ring are oriented at a negative angle to the horizontal for downward flow projection.

7. Device according to any one of the preceding claims, **characterised in that** it furthermore comprises a ring of nozzles (R) arranged around the open hob at the intermediate space (I) delimited by the cooking rack (G) and the heat source (S).

8. Device according to claim 7, **characterised in that** it furthermore comprises a nozzle control system capable of controlling opening/closing of the nozzles (B) and their orientation, in addition to the power of the flow thus pulsed by the nozzles.
